# EUROPÄISCHE PATENTANMELDUNG

(11) **EP 1 281 490 A1**
(43) Veröffentlichungstag der Anmeldung: **05.02.2003**
(21) Anmeldenummer: 02013202.3
(22) Anmeldetag: 15.06.2002
(51) Int. Cl.: B27K 3/08, B27K 3/15

(54) **Verfahren zur mikrobiziden Tiefenimprägnierung poröse Materialien**

(30) Priorität: 04.08.2001 DE 10138407
(71) Anmelder: Creavis Gesellschaft für Technologie und Innovation mbH, 45772 Marl (DE)
(72) Erfinder: Ottersbach, Peter, Dr., 51570 Windeck (DE); Sosna, Friedrich, Dr., 46285 Dorsten (DE)

(57) **Zusammenfassung**

Die Erfindung betrifft ein Verfahren zur mikrobiziden Tiefenimprägnierung poröser Materialien unter Verwendung antimikrobieller Polymere und erhöhtem äußeren Druck.

## Beschreibung

Die Erfindung betrifft ein Verfahren zur mikrobiziden Tiefenimprägnierung poröser Materialien unter Verwendung antimikrobieller Polymere.

Poröse Materialien, wie z.B. Holz oder Natursteine, bilden aufgrund ihrer großen Oberfläche nahezu ideale Bedingungen für einen mikrobiellen Befall. Dieser Befall führt neben einem getrübten optischen Erscheinungsbild auch zu mechanischen Defekten des Materials, was sich im extremen Fall bis zu ihrer vollständigen Zerstörung ausweiten kann. Ein derartiger mikrobieller Zersetzungsprozess wird auch als Biokorrosion bezeichnet. Eine herausragende Rolle spielen hierbei Schimmelpilze, wie z.B. Aspergillus niger, oder auch der sogenannte Hausschwamm. Sie dringen in die Poren der Materialien, seien es z.B. Beton, Sandstein, Hölzer oder sogar Gläser, ein und verursachen durch ihren Stoffwechsel einen schleichenden Zerfall der betroffenen Oberflächen. Daneben können die freiwerdenden Stoffwechselprodukte auch zu gesundheitlichen Beeinträchtigungen führen, die sich entweder akut toxisch oder auch chronisch in Form von Allergisierungen manifestieren können.
Besonderen Beanspruchungen unterliegen dabei naturgemäß poröse Materialien, die im Außenbereich Verwendung finden. Diese sind Temperatur- und Feuchtigkeitseinflüssen, und dem damit verbundenen Bewuchsdruck, unmittelbar ausgeliefert. Beispiele für derartige Anwendungen sind Holzbauten, wie z. B. Holzhäuser, Garten- und Geräteschuppen, Bahnschwellen, Holzschaukeln, Parkbänke und Holzbrücken.

Bisher begegnet man dem Problem Biokorrosion im Prinzip durch zwei Lösungsansätze.

Zum Einen wird eine Schutzschicht aus hydrophoben Beschichtungen auf die Flächen aufgetragen, um Wasser und Mikroben von der Oberfläche abzuhalten. Dieser Ansatz bewährt sich allerdings nur kurzzeitig, da die Mikroben Wege finden, sich auch an hydrophobe Oberflächen anzuheften. In der Folge werden die Beschichtungen beschädigt, so dass ein mikrobieller Angriff durch die Schutzschicht hindurch erfolgen kann, letztlich resultierend in einer partiellen Ablösung der betroffenen Stellen.
Der zweite Lösungsansatz besteht in einer massiven Verwendung niedermolekularer Biozide, die, zumeist als Additiv in Lacken, auf die zu schützenden Oberflächen aufgetragen werden. Da ein einziger Regenguss hierbei schon oft mehr als die Hälfte der aktiven Substanzen herausspült, wird diese Art des Oberflächenschutzes im Allgemeinen nur für Innenraumflächen, wie sie z.B. an Freseken, Skulpturen und Gemälden zu finden sind, angewandt. Als Alternative für Außenanwendungen hat sich auch die Kesseldruckimprägnierung etabliert, bei der durch Anlegen eines äußeren Drucks biozide Komponenten in das Material eingebracht werden. Als nachteilig erweist sich aber gerade bei der Kesseldruckimprägnierung, abgesehen vom Problem der Verwendung im Allgemeinen hochtoxischer Substanzen, die mangelnde Immobilisierung der eingebrachten Stoffe im behandelten Material. So werden z.B. die vielverwendeten Borsalze relativ leicht durch Wasser wieder aus dem Produkt herausgewaschen.

Aus der europäischen Patentanmeldung 0 862 858 ist bekannt, dass Copolymere von tert.-Butylaminoethylmethacrylat, einem Methacrylsäureester mit sekundärer Aminofunktion, inhärent mikrobizide Eigenschaften besitzen. Die antimikrobielle Wirksamkeit dieser polymeren Systeme ist eng mit ihrer dreidimensionalen Struktur, Konformation und verfügbaren Oberfläche verbunden. Sie eignen sich vor allem in Anwendungsbereichen, in denen es auf einen langanhaltenden, oberflächenaktiven Schutz vor mikrobiellem Angriff ankommt.

Die deutsche Patentanmeldung 100 62 201.1 setzt auf der Idee zur Verwendung antimikrobieller Polymere auf, und beschreibt den Einsatz dieser Polymere im Bauten- und Denkmalschutz. Ein Mangel des beschriebenen Verfahrens ist die unzureichende Penetrationstiefe der antimikrobiellen Polymere innerhalb der behandelten Materialien, wodurch z.B. mechanische Beschädigungen der Oberfläche zu einer Zerstörung des Materialschutzes führen können.

Die deutsche Patentanmeldung 101 22 149.5 versucht diesen Mangel durch Einsatz überkritischer Medien in der Imprägnierungsphase zu umgehen. Der Einsatz überkritischer Medien ist aber in Anbetracht der notwendigen hohen Drücke und speziellen Apparaturen sehr aufwendig, was das Verfahren nur in ausgewählten Marktsegmenten wettbewerbsfähig erscheinen lässt.
Der vorliegenden Erfindung liegt daher die Aufgabe zugrunde, Wege aufzuzeigen, wie poröse Materialien ohne den Einsatz überkritischer Medien mit antimikrobiellen Polymeren imprägniert werden können.

Es wurde nun überraschend gefunden, dass sich poröse Materialien mit antimikrobiellen Polymeren durch ein Verfahren imprägnieren lassen, welches auf dem in der Technik verbreiteten Verfahren der Kesseldruckimprägnierung aufbaut, und somit den Einsatz bereits bestehender Anlagen ermöglicht. Hierbei werden die antimikrobiellen Polymere, und gegebenenfalls weitere Hilfsstoffe, durch einen erhöhten Druck effizient in die Matrix der zu imprägnierenden porösen Materialien eingebracht.

Gegenstand der vorliegenden Erfindung ist daher ein Verfahren zur mikrobiziden Imprägnierung poröser Materialien mit antimikrobiellen Polymeren, dadurch gekennzeichnet, dass eine Lösung oder Dispersion mindestens eines antimikrobiellen Polymers auf das poröse Material aufgebracht und das so präparierte Material einem Druck von 2 bis 100 bar ausgesetzt wird.

Das erfindungsgemäße Verfahren gestaltet sich derart, dass das antimikrobielle Polymer im Allgemeinen in einem organischen Lösemittel gelöst oder in einem wässrigen Lösemittel dispergiert, und auf die poröse Oberfläche des zu behandelnden Materials aufgetragen wird. Dies kann z.B. durch Bestreichen, Besprühen oder Einlegen des Substrates in eine entsprechende Lösung erfolgen.

Gegebenenfalls, und zur nochmaligen Effizienzerhöhung des Verfahrens angezeigt, werden die Poren der porösen Materialien vor Aufbringen des antimikrobiellen Polymeren durch Anlegen eines Unterdrucks entlüftet.

Im Anschluss daran wird das so vorbehandelte Material einem äußeren Druck, der im Allgemeinen 2 bis 100 bar, bevorzugt 2 bis 50 bar, beträgt, ausgesetzt. Hierdurch wird das antimikrobielle Polymer in das Material gepresst. Optional findet im Anschluss daran eine Nachentlüftung statt, dass heißt, überschüssige Löse- und Verarbeitungshilfsmittel werden nach der Druckbehandlung durch Anlegen eines Unterdruckes aus dem Material entfernt. Die Unterdruckbehandlung kann vor und/oder nach der Druckbehandlung durchgeführt werden.

Da die antimikrobielle Eigenschaft dem Polymer selber innewohnt, welches durch das angewandte Verfahren tief in die Poren des Substrates eingetragen und an diesem im Allgemeinen mittels Physi- und oder Chemiesorption immobilisiert wird, ist ein Auswaschen der aktiven Spezies prinzipbedingt ausgeschlossen. Darüber hinaus tragen antimikrobielle Polymere im Allgemeinen hydrophile Gruppen, die zu einer Quellung des Polymers im Wasserkontakt führen, so dass bei der für mikrobielle Angriffe erforderlichen Gegenwart von Feuchtigkeit eine Quellung des Polymers in den Poren des Substrates erfolgt, was letztlich zu einer vollständigen Abdichtung dieser Poren führt. Da die antimikrobiellen Polymere aufgrund ihrer polymeren Struktur bedeutend weniger giftig als niedermolekulare Biozide sind, ist auch eine ökologisch und toxikologisch unbedenkliche Verarbeitung dieser Substanzen zur Materialimprägnierung möglich.

Die so behandelten Oberflächen zeigen eine antimikrobielle Wirksamkeit, die dauerhaft und gegen Umwelteinflüsse und physikalische Beanspruchungen widerstandsfähig ist. Diese Beschichtungen enthalten keine niedermolekularen Biozide, was eine Migration ökologisch problematischer Stoffe über den gesamten Nutzungszeitraum hinweg effektiv ausschließt.

Zur Vorbereitung des porösen Materials kann vor dem Aufbringen des antimikrobiellen Polymeren eine Wasserdampfbehandlung durchgeführt werden. Zweckmäßig wird diese nach einer optionalen Vakuumbehandlung durchgeführt; es kann aber zu Reinigungszwecken auch vor Anlegen des Vakuums eine Behandlung mit Wasserdampf durchgeführt werden.

Es ist weiterhin möglich, die Wasserdampfbehandlung nach Aufbringen des antimikrobiellen Polymeren, jedoch vor der Druckbehandlung durchzuführen. Auf diese Weise wird ein "Schleppmitteleffekt" des Wassers ausgenutzt.
Als Lösungsmittel kommen alle organischen Lösungsmittel, die eine ausreichende Löslichkeit für das Polymer besitzen in Betracht, wie z. B. Alkohole wie Ethanol, Methanol, Propanol, Isopropanol, Acetate wie Ethylacetat, Butylacetat, Ketone wie Aceton, Methylethylketon, Aromaten wie Toluol, Xylol, Ether, wie z. B. THF, Diethylether, Dioxan, DMF, Kohlenwasserstoffe, wie z. B. n-Hexan, Cyclohexan.

Die Konzentration des Polymeren im Lösungsmittel beträgt in der Regel 1 bis 20 Gew.-%.

Dispersionen werden im gleichen Konzentrationsbereich, in der Regel 0,1 bis 20 Gew.-%, mit Wasser und ggf. Tensiden, Emulgatoren oder den o. g. Alkoholen hergestellt.

Die Unterdruck-Vorbehandlung kann im Bereich 0,01 bis 100 mbar, bevorzugt 1 bis 10 mbar, die Druckbehandlung bei 2 bis 100 bar, bevorzugt 2 bis 50 bar, besonders bevorzugt 5 bis 25 bar, durchgeführt werden. Der Druck wird bevorzugt mit inerten Gasen wie Stickstoff, CO₂ oder durch Luft aufgebaut.

Die antimikrobiellen Polymere werden bevorzugt aus mindestens einem Stickstoff- oder phosphorfunktionalisierten Monomeren, ganz besonders bevorzugt aus mindestens einem der Monomeren der Gruppe Methacrylsäure-2-tert.-butylaminoethylester, Methacrylsäure-2-diethylaminoethylester, Methacrylsäure-2-diethylaminomethylester, Acrylsäure-2-tert.-butylaminoethylester, Acrylsäure-3-dimethylaminopropylester, Acrylsäure-2-diethylaminoethylester, Acrylsäure-2-dimethylaminoethylester, Dimethylaminopropylmethacrylamid, Diethylaminopropylmethacrylamid, Acrylsäure-3-dimethylaminopropylamid, 2-Methacryloyloxyethyltrimethylammoniummethosulfat, Methacrylsäure-2-diethylaminoethylester, 2-Methacryloyioxyethyltrimethylammoniumchlorid, 3-Methacryloylaminopropyltrimethylammonium-chlorid, 2-Methacryloyloxyethyltrimethylammoniumchlorid, 2- Acryloyloxyethyl-4-benzyldimethylammoniumbromid, 2- Methacryloyloxyethyl-4-benzyldimethylammoniumbromid, Allyltriphenylphosphoniumbromid, Allyltriphenylphosphoniumchlorid, 2-Acrylamido-2-methyl-1-propansulfonsäure, 2-Diethylaminoethylvinylether und/oder 3-Aminopropylvinylether hergestellt.

Es ist möglich, das neben den o. g. Monomeren weitere Monomere wie z. B. Acrylate oder Methacrylate, Acrylsäure, tert.-Butylmethacrylat oder Methylmethacrylat, Styrol oder seine Derivate, Vinylchlorid, Vinylether, Acrylamide, Acrylnitrile, Olefine (Ethylen, Propylen, Butylen, Isobutylen), Allylverbindungen, Vinylketone, Vinylessigsäure, Vinylacetat oder Vinylester, Methacrylsäuremethylester, Methacrylsäureethylester, Methacrylsäurebutylester, Methacrylsäure-tert.-butylester, Acrylsäuremethylester, Acrylsäureethylester, Acrylsäurebutylester und/oder Acrylsäure-tert.-butylester eingesetzt werden, d. h. ein antimikrobielles Copolymeres verwendet wird.

Das Lösungs- und Dispersionsmittel kann vor Anlegen des Überdrucks entfernt werden. Dies ist z. B. durch die bereits genannte Vakuumbehandlung, durch Eintrocknen oder Erwärmen möglich.

### Verwendung der modifizierten Substrate

Ein weiterer Gegenstand der vorliegenden Erfindung ist der Einsatz des erfindungsgemäßen Verfahrens im Bau-, Bauten- und Denkmalschutz. Die bevorzugt behandelten porösen Materialien basieren auf Baustoffen, wie z.B. Beton, Zement, Mörtel, Natur- und Kunststeinen, Mineralien, Tonen, Hölzern, Gläsern und Keramiken. Die porösen Materialien können vor oder nach deren endgültigen Einbau mit dem erfindungsgemäßen Verfahren imprägniert werden.

Zur weiteren Beschreibung der vorliegenden Erfindung werden die folgenden Beispiele gegeben, die die Erfindung weiter erläutern, nicht aber ihren Umfang begrenzen sollen, wie er in den Patentansprüchen dargelegt ist.

### Beispiel 1:

50 ml Dimethylaminopropylmethacrylamid (Fa. Aldrich) und 250 ml Ethanol werden in einem Dreihalskolben vorgelegt und unter Argonzustrom auf 65 °C erhitzt. Danach werden 0,6 g Azobisisobutyronitril gelöst in 20 ml Ethylmethylketon unter Rühren langsam zugetropft. Das Gemisch wird auf 70 °C erhitzt und 72 h Stunden bei dieser Temperatur gerührt. Nach Ablauf dieser Zeit wird die Reaktionsmischung in 1,5 l VE-Wasser eingerührt, wobei das polymere Produkt ausfällt. Nach Abfiltrieren des Produktes wird der Filterrückstand mit 100 ml einer Mischung aus Ethanol/VE-Wasser im Verhältnis 1:1 gespült, um noch vorhandene Restmonomere zu entfernen. Im Anschluss wird das Produkt für 24 Stunden bei 50 °C im Vakuum getrocknet.

Ein Fichtenholzstück der Größe 40 mal 40 mal 300 mm wird in einen Liter einer Lösung aus 5 Gewichtsprozent des polymeren Produktes und 95 Gewichtsprozent Ethanol bei Raumtemperatur für die Dauer von einer Stunde getaucht. Dieses so vorbehandelte Holzstück wird dann in einen Autoklaven gebracht, der darauf mit der gleichen 5 gewichtsprozentigen Lösung des antimikrobiellen Polymers gefüllt wird. Bei 40 °C wird ein Druck von 8 bar aufgedrückt, wobei diese Bedingungen für eine Stunde aufrecht erhalten werden. Nach der Entspannung des Systems wird das Holzstück aus dem Autoklaven entnommen und bei 30 °C und 50 mbar Druck für die Dauer von 4 Stunden getrocknet.

### Beispiel 1a:

Auf das Holzstück aus Beispiel 1 wird ein Tropfen einer Keimsuspension von Staphylococcus aureus gegeben, der eine Keinzahl von 10⁷ Keimen pro mL enthält. Nach einer Kontaktzeit von 4 Stunden wird der Tropfen mit einer Pipette aufgenommen, und die Keimzahl im Versuchsansatz bestimmt. Nach Ablauf dieser Zeit ist die Keimzahl auf 10² Keime pro mL abgesunken.

### Beispiel 1b:

Auf das Holzstück aus Beispiel 1 wird ein Tropfen einer Keimsuspension von Pseudomonas aeruginosa gegeben, der eine Keinzahl von 10⁷ Keimen pro mL enthält. Nach einer Kontaktzeit von 4 Stunden wird der Tropfen mit einer Pipette aufgenommen, und die Keimzahl im Versuchsansatz bestimmt. Nach Ablauf dieser Zeit ist die Keimzahl auf 10⁴ Keime pro mL abgesunken.

### Beispiel 1c:

Je ein imprägniertes Holzstück aus Beispiel 1 wird mit Chlorella sp., Trentepohlia sp., Gloeocapsa sp. Calothrix sp. und Aspergillus niger beimpft. Diese Proben werden im Anschluss für 3 Wochen in einen Brutschrank verbracht. Im Gegensatz zu mitlaufenden Kontrollproben ist bei keinem der imprägnierten Holzstücke ein Bewuchs feststellbar.

### Beispiel 2:

50 ml tert.-Butylaminoethylmethacrylat (Fa. Aldrich) und 250 ml Ethanol werden in einem Dreihalskolben vorgelegt und unter Argonzustrom auf 65 °C erhitzt. Danach werden 0,6 g Azobisisobutyronitril gelöst in 20 ml Ethylmethylketon unter Rühren langsam zugetropft. Das Gemisch wird auf 70 °C erhitzt und 72 h Stunden bei dieser Temperatur gerührt. Nach Ablauf dieser Zeit wird die Reaktionsmischung in 1,5 l VE-Wasser eingerührt, wobei das polymere Produkt ausfällt. Nach Abfiltrieren des Produktes wird der Filterrückstand mit 100 ml einer Mischung aus Ethanol/VE-Wasser im Verhältnis 1 :1 gespült, um noch vorhandene Restmonomere zu entfernen. Im Anschluss wird das Produkt für 24 Stunden bei 50 °C im Vakuum getrocknet.

Ein Buchenholzstück der Größe 40 mal 40 mal 300 mm wird einen Autoklaven verbracht. Im Anschluss wird für die Dauer von 5 Minuten ein Unterdruck von 1 mbar angelegt. Der Autoklav wird nun mit einem Liter einer Lösung aus 5 Gewichtsprozent des polymeren Produktes und 95 Gewichtsprozent Ethanol befüllt. Bei 40 °C wird ein Druck von 15 bar aufgedrückt, wobei diese Bedingungen für eine Stunde aufrecht erhalten werden. Nach der Entspannung des Systems wird das Holzstück aus dem Autoklaven entnommen und bei 30° C und 50 mbar Druck für die Dauer von 4 Stunden getrocknet.

### Beispiel 2a:

Auf das Holzstück aus Beispiel 2 wird ein Tropfen einer Keimsuspension von Staphylococcus aureus gegeben, der eine Keinzahl von 10⁷ Keimen pro mL enthält. Nach einer Kontaktzeit von 4 Stunden wird der Tropfen mit einer Pipette aufgenommen, und die Keimzahl im Versuchsansatz bestimmt. Nach Ablauf dieser Zeit sind keine Keime von Staphylococcus aureus mehr nachweisbar.

### Beispiel 2b:

Auf das Holzstück aus Beispiel 2 wird ein Tropfen einer Keimsuspension von Pseudomonas aeruginosa gegeben, der eine Keinzahl von 10⁷ Keimen pro mL enthält. Nach einer Kontaktzeit von 4 Stunden wird der Tropfen mit einer Pipette aufgenommen, und die Keimzahl im Versuchsansatz bestimmt. Nach Ablauf dieser Zeit sind keine Keime von von Pseudomonas aeruginosa mehr nachweisbar.

### Beispiel 2c:

Je ein imprägniertes Holzstück aus Beispiel 2 wird mit Chlorella sp., Trentepohlia sp., Gloeocapsa sp. Calothrix sp. und Aspergillus niger beimpft. Diese Proben werden im Anschluss für 3 Wochen in einen Brutschrank verbracht. Im Gegensatz zu mitlaufenden Kontrollproben ist bei keinem der imprägnierten Holzstücke ein Bewuchs feststellbar.

### Beispiel 3:

30 mL tert.-Butylaminoethylmethacrylat (Fa. Aldrich), 84 g Triton X 405 (Fa. Aldrich), 375 mL VE-Wasser und 1,4 g Kaliumperoxodisulfat (Fa. Aldrich) werden in einem Dreihalskolben vorgelegt und unter Argonzustrom auf 60 °C erhitzt. Danach werden über einen Zeitraum von 4 Stunden weitere 340 mL tert.-Butylaminoethylmethacrylat zugetropft. Anschließend rührt man die Mischung noch weitere 2 Stunden bei 60 °C, danach lässt man die entstandene Dispersion auf Raumtemperatur abkühlen.

Ein Fichtenholzstück der Größe 40 mal 40 mal 300 mm wird in einen Liter Mischung aus 30 Gewichtsprozent der Dispersion und 70 Gewichtsprozent Wasser bei Raumtemperatur für die Dauer von einer Stunde getaucht. Dieses so vorbehandelte Holzstück wird dann in einen Autoklaven gebracht, der darauf mit der gleichen 30 gewichtsprozentigen Lösung der antimikrobiellen Dispersion gefüllt wird. Bei 40 °C wird ein Druck von 15 bar aufgedrückt, wobei diese Bedingungen für eine Stunde aufrecht erhalten werden. Nach der Entspannung des Systems wird das Holzstück aus dem Autoklaven entnommen und bei 30 °C und 50 mbar Druck für die Dauer von 4 Stunden getrocknet.

### Beispiel 3a:

Auf das Holzstück aus Beispiel 3 wird ein Tropfen einer Keimsuspension von Staphylococcus aureus gegeben, der eine Keinzahl von 10⁷ Keimen pro mL enthält. Nach einer Kontaktzeit von 4 Stunden wird der Tropfen mit einer Pipette aufgenommen, und die Keimzahl im Versuchsansatz bestimmt. Nach Ablauf dieser Zeit ist die Keimzahl auf 10² Keime pro mL abgesunken.

### Beispiel 3b:

Auf das Holzstück aus Beispiel 3 wird ein Tropfen einer Keimsuspension von Pseudomonas aeruginosa gegeben, der eine Keinzahl von 10⁷ Keimen pro mL enthält. Nach einer Kontaktzeit von 4 Stunden wird der Tropfen mit einer Pipette aufgenommen, und die Keimzahl im Versuchsansatz bestimmt. Nach Ablauf dieser Zeit ist die Keimzahl auf 10³ Keime pro mL abgesunken.

### Beispiel 3c:

Je ein imprägniertes Holzstück aus Beispiel 3 wird mit Chlorella sp., Trentepohlia sp., Gloeocapsa sp. Calothrix sp. und Aspergillus niger beimpft. Diese Proben werden im Anschluss für 3 Wochen in einen Brutschrank verbracht. Im Gegensatz zu mitlaufenden Kontrollproben ist bei keinem der imprägnierten Holzstücke ein Bewuchs feststellbar.

### Beispiel 4:

30 mL tert.-Butylaminoethylmethacrylat (Fa. Aldrich), 84 g Triton X 405 (Fa. Aldrich), 375 mL VE-Wasser und 1,4 g Kaliumperoxodisulfat (Fa. Aldrich) werden in einem Dreihalskolben vorgelegt und unter Argonzustrom auf 60 °C erhitzt. Danach werden über einen Zeitraum von 4 Stunden weitere 340 mL tert.-Butylaminoethylmethacrylat zugetropft. Anschließend rührt man die Mischung noch weitere 2 Stunden bei 60 °C, danach lässt man die entstandene Dispersion auf Raumtemperatur abkühlen.

Ein Buchenholzstück der Größe 40 mal 40 mal 300 mm wird einen Autoklaven verbracht. Im Anschluss wird für die Dauer von 5 Minuten ein Unterdruck von 1 mbar angelegt. Der Autoklav wird nun mit einem Liter einer Mischung aus 30 Gewichtsprozent der polymeren Dispersion und 70 Gewichtsprozent Wasser befüllt. Bei 40° C wird ein Druck von 15 bar aufgedrückt, wobei diese Bedingungen für eine Stunde aufrecht erhalten werden. Nach der Entspannung des Systems wird das Holzstück aus dem Autoklaven entnommen und bei 30° C und 50 mbar Druck für die Dauer von 4 Stunden getrocknet.

### Beispiel 4a:

Auf das Holzstück aus Beispiel 4 wird ein Tropfen einer Keimsuspension von Staphylococcus aureus gegeben, der eine Keinzahl von 10⁷ Keimen pro mL enthält. Nach einer Kontaktzeit von 4 Stunden wird der Tropfen mit einer Pipette aufgenommen, und die Keimzahl im Versuchsansatz bestimmt. Nach Ablauf dieser Zeit sind keine Keime von Staphylococcus aureus mehr nachweisbar.

### Beispiel 4b:

Auf das Holzstück aus Beispiel 4 wird ein Tropfen einer Keimsuspension von Pseudomonas aeruginosa gegeben, der eine Keinzahl von 10⁷ Keimen pro mL enthält. Nach einer Kontaktzeit von 4 Stunden wird der Tropfen mit einer Pipette aufgenommen, und die Keimzahl im Versuchsansatz bestimmt. Nach Ablauf dieser Zeit sind keine Keime von von Pseudomonas aeruginosa mehr nachweisbar.

### Beispiel 4c:

Je ein imprägniertes Holzstück aus Beispiel 4 wird mit Chlorella sp., Trentepohlia sp., Gloeocapsa sp. Calothrix sp. und Aspergillus niger beimpft. Diese Proben werden im Anschluss für 3 Wochen in einen Brutschrank verbracht. Im Gegensatz zu mitlaufenden Kontrollproben ist bei keinem der imprägnierten Holzstücke ein Bewuchs feststellbar.

### Beispiel 5:

200 ml tert.-Butylaminoethylmethacrylat (Fa. Aldrich) und 1 g Azobisisobutyronitril werden zwischen zwei Glasplatten, welche parallel im Abstand von 1,5 cm arretiert, mit Cellophanfolie ausgekleidet und an den Rändern mit Dichtungen versehen sind, gegeben. Dieser Aufbau wird für die Dauer von 6 Stunden in ein 70 °C heißes Wasserbad gelegt. Nach Ablauf dieser Zeit wird der Aufbau entnommen, und nach Abkühlung auf Raumtemperatur werden die Platten voneinander getrennt. Das polymere Produkt wird entnommen und gemörsert.

Ein Fichtenholzstück der Größe 40 mal 40 mal 300 mm wird in einen Liter einer Lösung aus 5 Gewichtsprozent des polymeren Produktes und 95 Gewichtsprozent Ethanol bei Raumtemperatur für die Dauer von einer Stunde getaucht. Dieses so vorbehandelte Holzstück wird dann in einen Autoklaven gebracht, der darauf mit der gleichen 5 gewichtsprozentigen Lösung des antimikrobiellen Polymers gefüllt wird. Bei 40 °C wird ein Druck von 15 bar aufgedrückt, wobei diese Bedingungen für eine Stunde aufrecht erhalten werden. Nach der Entspannung des Systems wird das Holzstück aus dem Autoklaven entnommen und bei 30 °C und 50 mbar Druck für die Dauer von 4 Stunden getrocknet.

### Beispiel 5a:

Auf das Holzstück aus Beispiel 5 wird ein Tropfen einer Keimsuspension von Staphylococcus aureus gegeben, der eine Keinzahl von 10⁷ Keimen pro mL enthält. Nach einer Kontaktzeit von 4 Stunden wird der Tropfen mit einer Pipette aufgenommen, und die Keimzahl im Versuchsansatz bestimmt. Nach Ablauf dieser Zeit ist die Keimzahl auf 10² Keime pro mL abgesunken.

### Beispiel 5b:

Auf das Holzstück aus Beispiel 5 wird ein Tropfen einer Keimsuspension von Pseudomonas aeruginosa gegeben, der eine Keinzahl von 10⁷ Keimen pro mL enthält. Nach einer Kontaktzeit von 4 Stunden wird der Tropfen mit einer Pipette aufgenommen, und die Keimzahl im Versuchsansatz bestimmt. Nach Ablauf dieser Zeit ist die Keimzahl auf 10⁴ Keime pro mL abgesunken.

### Beispiel 5c:

Je ein imprägniertes Holzstück aus Beispiel 5 wird mit Chlorella sp., Trentepohlia sp., Gloeocapsa sp. Calothrix sp. und Aspergillus niger beimpft. Diese Proben werden im Anschluss für 3 Wochen in einen Brutschrank verbracht. Im Gegensatz zu mitlaufenden Kontrollproben ist bei keinem der imprägnierten Holzstücke ein Bewuchs feststellbar.

### Beispiel 6:

60 g 3-Aminopropyl-vinylether (Fa. Aldrich), 60 g Methacrylsäuremethylester (Fa. Aldrich), und 600 ml Ethanol werden in einem Dreihalskolben vorgelegt und unter Argonzustrom auf 65 °C erhitzt. Danach werden 1,5 g Azobisisobutyronitril gelöst in 20 ml Ethylmethylketon unter Rühren langsam zugetropft. Das Gemisch wird auf 70 °C erhitzt und 72 h Stunden bei dieser Temperatur gerührt. Nach Ablauf dieser Zeit wird die Reaktionsmischung in 3 l VE-Wasser eingerührt, wobei das polymere Produkt ausfällt. Nach Abfiltrieren des Produktes wird der Filterrückstand mit 1000 ml VE-Wasser gespült, um noch vorhandene Restmonomere zu entfernen. Im Anschluss wird das Produkt für 24 Stunden bei 50 °C im Vakuum getrocknet.

Ein Buchenholzstück der Größe 40 mal 40 mal 300 mm wird in einen Liter einer Lösung aus 5 Gewichtsprozent des polymeren Produktes und 95 Gewichtsprozent Ethanol bei Raumtemperatur für die Dauer von einer Stunde getaucht. Dieses so vorbehandelte Holzstück wird dann in einen Autoklaven gebracht, der darauf mit der gleichen 5 gewichtsprozentigen Lösung des antimikrobiellen Polymers gefüllt wird. Bei 40 °C wird ein Druck von 15 bar aufgedrückt, wobei diese Bedingungen für eine Stunde aufrecht erhalten werden. Nach der Entspannung des Systems wird das Holzstück aus dem Autoklaven entnommen und bei 30° C und 50 mbar Druck für die Dauer von 4 Stunden getrocknet.

### Beispiel 6a:

Auf das Holzstück aus Beispiel 6 wird ein Tropfen einer Keimsuspension von Staphylococcus aureus gegeben, der eine Keinzahl von 10⁷ Keimen pro mL enthält. Nach einer Kontaktzeit von 4 Stunden wird der Tropfen mit einer Pipette aufgenommen, und die Keimzahl im Versuchsansatz bestimmt. Nach Ablauf dieser Zeit ist die Keimzahl auf 10² Keime pro mL abgesunken.

### Beispiel 6b:

Auf das Holzstück aus Beispiel 6 wird ein Tropfen einer Keimsuspension von Pseudomonas aeruginosa gegeben, der eine Keinzahl von 10⁷ Keimen pro mL enthält. Nach einer Kontaktzeit von 4 Stunden wird der Tropfen mit einer Pipette aufgenommen, und die Keimzahl im Versuchsansatz bestimmt. Nach Ablauf dieser Zeit ist die Keimzahl auf 10² Keime pro mL abgesunken.

### Beispiel 6c:

Je ein imprägniertes Holzstück aus Beispiel 6 wird mit Chlorella sp., Trentepohlia sp., Gloeocapsa sp. Calothrix sp. und Aspergillus niger beimpft. Diese Proben werden im Anschluss für 3 Wochen in einen Brutschrank verbracht. Im Gegensatz zu mitlaufenden Kontrollproben ist bei keinem der imprägnierten Holzstücke ein Bewuchs feststellbar.

### Beispiel 7:

30 mL tert.-Butylaminoethylmethacrylat (Fa. Aldrich), 84 g Triton X 405 (Fa. Aldrich), 375 mL VE-Wasser und 1,4 g Kaliumperoxodisulfat (Fa. Aldrich) werden in einem Dreihalskolben vorgelegt und unter Argonzustrom auf 60 °C erhitzt. Danach werden über einen Zeitraum von 4 Stunden weitere 340 mL tert.-Butylaminoethylmethacrylat zugetropft. Anschließend rührt man die Mischung noch weitere 2 Stunden bei 60 °C, danach lässt man die entstandene Dispersion auf Raumtemperatur abkühlen.

Ein Buchenholzstück der Größe 40 mal 40 mal 300 mm wird in einen Autoklaven verbracht und für die Dauer von 10 Minuten mit 120 °C heißem Wasserdampf behandelt. Der Autoklav wird nun mit einem Liter einer Mischung aus 30 Gewichtsprozent der polymeren Dispersion und 70 Gewichtsprozent Wasser befüllt. Bei 40 °C wird ein Druck von 10 bar aufgedrückt, wobei diese Bedingungen für 10 Minuten aufrecht erhalten werden. Nach der Entspannung des Systems wird das Holzstück aus dem Autoklaven entnommen und bei 30 °C und 50 mbar Druck für die Dauer von 4 Stunden getrocknet.

### Beispiel 7a:

Auf das Holzstück aus Beispiel 7 wird ein Tropfen einer Keimsuspension von Staphylococcus aureus gegeben, der eine Keinzahl von 10⁷ Keimen pro mL enthält. Nach einer Kontaktzeit von 4 Stunden wird der Tropfen mit einer Pipette aufgenommen, und die Keimzahl im Versuchsansatz bestimmt. Nach Ablauf dieser Zeit sind keine Keime von Staphylococcus aureus mehr nachweisbar.

### Beispiel 7b:

Auf das Holzstück aus Beispiel 7 wird ein Tropfen einer Keimsuspension von Pseudomonas aeruginosa gegeben, der eine Keinzahl von 10⁷ Keimen pro mL enthält. Nach einer Kontaktzeit von 4 Stunden wird der Tropfen mit einer Pipette aufgenommen, und die Keimzahl im Versuchsansatz bestimmt. Nach Ablauf dieser Zeit sind keine Keime von von Pseudomonas aeruginosa mehr nachweisbar.

### Beispiel 7c:

Je ein imprägniertes Holzstück aus Beispiel 7 wird mit Chlorella sp., Trentepohlia sp., Gloeocapsa sp. Calothrix sp. und Aspergillus niger beimpft. Diese Proben werden im Anschluss für 3 Wochen in einen Brutschrank verbracht. Im Gegensatz zu mitlaufenden Kontrollproben ist bei keinem der imprägnierten Holzstücke ein Bewuchs feststellbar.

### Beispiel 8:

200 ml tert.-Butylaminoethylmethacrylat (Fa. Aldrich) und 1 g Azobisisobutyronitril werden zwischen zwei Glasplatten, welche parallel im Abstand von 1,5 cm arretiert, mit Cellophanfolie ausgekleidet und an den Rändern mit Dichtungen versehen sind, gegeben. Dieser Aufbau wird für die Dauer von 6 Stunden in ein 70 °C heißes Wasserbad gelegt. Nach Ablauf dieser Zeit wird der Aufbau entnommen, und nach Abkühlung auf Raumtemperatur werden die Platten voneinander getrennt. Das polymere Produkt wird entnommen und gemörsert.

Ein Sandstein der Größe 10 mal 10 mal 80 mm wird einen Autoklaven verbracht. Im Anschluss wird für die Dauer von 5 Minuten ein Unterdruck von 1 mbar angelegt. Der Autoklav wird nun mit einem Liter einer Mischung aus 30 Gewichtsprozent der polymeren Dispersion und 70 Gewichtsprozent Wasser befüllt. Bei 40 °C wird ein Druck von 15 bar aufgedrückt, wobei diese Bedingungen für eine Stunde aufrecht erhalten werden. Nach der Entspannung des Systems wird der Sandstein aus dem Autoklaven entnommen und bei 30 °C und 50 mbar Druck für die Dauer von 4 Stunden getrocknet.

### Beispiel 8a:

Auf den Sandstein aus Beispiel 8 wird ein Tropfen einer Keimsuspension von Staphylococcus aureus gegeben, der eine Keinzahl von 10⁷ Keimen pro mL enthält. Nach einer Kontaktzeit von 4 Stunden wird der Tropfen mit einer Pipette aufgenommen, und die Keimzahl im Versuchsansatz bestimmt. Nach Ablauf dieser Zeit sind keine Keime von Staphylococcus aureus mehr nachweisbar.

### Beispiel 8b:

Auf den Sandstein aus Beispiel 8 wird ein Tropfen einer Keimsuspension von Pseudomonas aeruginosa gegeben, der eine Keinzahl von 10⁷ Keimen pro mL enthält. Nach einer Kontaktzeit von 4 Stunden wird der Tropfen mit einer Pipette aufgenommen, und die Keimzahl im Versuchsansatz bestimmt. Nach Ablauf dieser Zeit sind keine Keime von von Pseudomonas aeruginosa mehr nachweisbar.

### Beispiel 8c:

Je ein imprägnierter Sandstein aus Beispiel 8 wird mit Chlorella sp., Trentepohlia sp., Gloeocapsa sp. Calothrix sp. und Aspergillus niger beimpft. Diese Proben werden im Anschluss für 3 Wochen in einen Brutschrank verbracht. Im Gegensatz zu mitlaufenden Kontrollproben ist bei keinem der imprägnierten Sandsteine ein Bewuchs feststellbar.

## Patentansprüche

1. Verfahren zur mikrobiziden Imprägnierung poröser Materialien mit antimikrobiellen Polymeren,
**dadurch gekennzeichnet,**
**dass** eine Lösung oder Dispersion mindestens eines antimikrobiellen Polymers auf das poröse Material aufgebracht und das so präparierte Material einem Druck von 2 bis 100 bar ausgesetzt wird.

2. Verfahren nach Anspruch 1,
**dadurch gekennzeichnet,**
**dass** das poröse Material vor der Aufbringung des antimikrobiellen Polymeren durch Anlegen von Unterdruck vorbehandelt wird.

3. Verfahren nach einem der Ansprüche 1 oder 2,
**dadurch gekennzeichnet,**
**dass** vor und/oder nach Anlegen des Überdrucks Unterdruck angelegt wird.

4. Verfahren nach Anspruch 1 oder 2,
**dadurch gekennzeichnet,**
**dass** das poröse Material vor und/oder nach der Aufbringung des antimikrobiellen Polymeren mit Wasserdampf behandelt wird.

5. Verfahren nach einem der Ansprüche 1 bis 4,
**dadurch gekennzeichnet,**
**dass** das Lösemittel oder Dispersionsmittel vor Anlegen des Überdrucks entfernt wird.

6. Verfahren nach einem der Ansprüche 1 bis 5,
**dadurch gekennzeichnet,**
**dass** es sich bei den porösen Materialien um Natur- oder Kunststein, Mineralien, Beton, Holz, Gips, Glas, Ton, Zement, Mörtel oder Keramik, jeweils verarbeitet oder unverarbeit, handelt.

7. Verfahren nach einem der Ansprüche 1 bis 6,
**dadurch gekennzeichnet,**
**dass** die antimikrobiellen Polymere aus mindestens einem Stickstoff- oder Phosphorfunktionalisierten Monomeren hergestellt werden.

8. Verfahren nach einem der Ansprüche 1 bis 7,
**dadurch gekennzeichnet,**
**dass** die antimikrobiellen Polymere aus mindestens einem der Monomere aus der Gruppe Methacrylsäure-2-tert.-butylaminoethylester, Methacrylsäure-2-diethylaminoethylester, Methacrylsäure-2-diethylaminomethylester, Acrylsäure-2-tert.-butylaminoethylester, Acrylsäure-3-dimethylaminopropylester, Acrylsäure-2-diethylaminoethylester, Acrylsäure-2-dimethylaminoethylester, Dimethylaminopropylmethacrylamid, Diethylaminopropylmethacrylamid, Acrylsäure-3 -dimethylaminopropylamid, 2-Methacryloyloxyethyltrimethylammoniummethosulfat, Methacrylsäure-2-diethylaminoethylester, 2-Methacryloyloxyethyltrimethylammoniumchlorid, 3-Methacryloylaminopropyltrimethylammonium-chlorid, 2-Methacryloyloxyethyltrimethylammoniumchlorid, 2-Acryloyloxyethyl-4-benzyldimethylammoniumbromid, 2-Methacryloyloxyethyl-4-benzyldimethylammoniumbromid, Allyltriphenylphosphoniumbromid, Allyltriphenylphosphoniumchlorid, 2-Acrylamido-2-methyl-1-propansulfonsäure, 2-Diethylaminoethylvinylether und/oder 3-Aminopropylvinylether hergestellt werden.

9. Verfahren nach Anspruch 8,
**dadurch gekennzeichnet,**
**dass** die antimikrobiellen Polymeren als Comonomer mindestens ein Monomer der Gruppe Acrylate oder Methacrylate, Acrylsäure, tert.-Butylmethacrylat oder Methylmethacrylat, Styrol oder seine Derivate, Vinylchlorid, Vinylether, Acrylamide, Acrylnitrile, Olefine (Ethylen, Propylen, Butylen, Isobutylen), Allylverbindungen, Vinylketone, Vinylessigsäure, Vinylacetat oder Vinylester, Methacrylsäuremethylester, Methacrylsäureethylester, Methacrylsäurebutylester, Methacrylsäure-tert.-butylester, Acrylsäuremethylester, Acrylsäureethylester, Acrylsäurebutylester und/oder Acrylsäuretert.-butylester, enthalten.
